# EUROPEAN PATENT SPECIFICATION

(11) **EP 1 911 620 B1**
(45) Date of publication and mention of the grant of the patent: **05.05.2010**
(21) Application number: 07380273.8
(22) Date of filing: 09.10.2007
(51) Int. Cl.: B60J 7/00, B60J 1/20

(54) **Shading system for a transparent area of an automotive vehicle roof, and automotive vehicle**
Abschattungssystem für einen transparenten Bereich eines Kraftfahrzeugdaches und Kraftfahrzeug
Système d'occultation pour zone transparente d'un toît de véhicule automobile, et véhicule automobile

(30) Priority: 09.10.2006 ES 200602569
(43) Date of publication of application: 16.04.2008
(73) Proprietor: GRUPO ANTOLIN-INGENIERIA, S.A., 09007 Burgos (ES)
(72) Inventor: Sadornil Santamaria, Juan Carlos, 09007 Burgos (ES); Alamo Arnaiz, Javier del, 09007 Burgos (ES)
(74) Representative: Carpintero Lopez, Francisco

(56) References cited:
- EP-A- 0 931 682
- EP-A- 1 112 876
- WO-A-2006/086965
- JP-A- 63 258 213

## Description

### TECHNICAL FIELD OF THE INVENTION

The invention is comprised within the automobile sector and relates to roof shading blinds.

### BACKGROUND OF THE INVENTION

Vehicles with a panoramic roof, i.e. with a roof having a transparent area (i.e. letting light through) are increasingly common today. Shading systems are usually used to regulate or prevent the entrance of light through said area, which systems in many cases comprise at least one roller blind, which is coiled by the action of a coiling element (usually comprising a spring-based mechanism tending to coil the blind). The blind usually comprises at a free end a transverse rod which is guided in longitudinal channels located in correspondence with the transparent area and normally running in a substantially horizontal manner (although they may have a certain curvature adapted to the curvature of the vehicle roof) and in the longitudinal direction of the vehicle. This transverse rod is usually provided with (or associated to) any fixing means configured to temporarily fix the blind in a unfolded position of the blind, retaining the blind in said position, sometimes against the action of the coiling element.

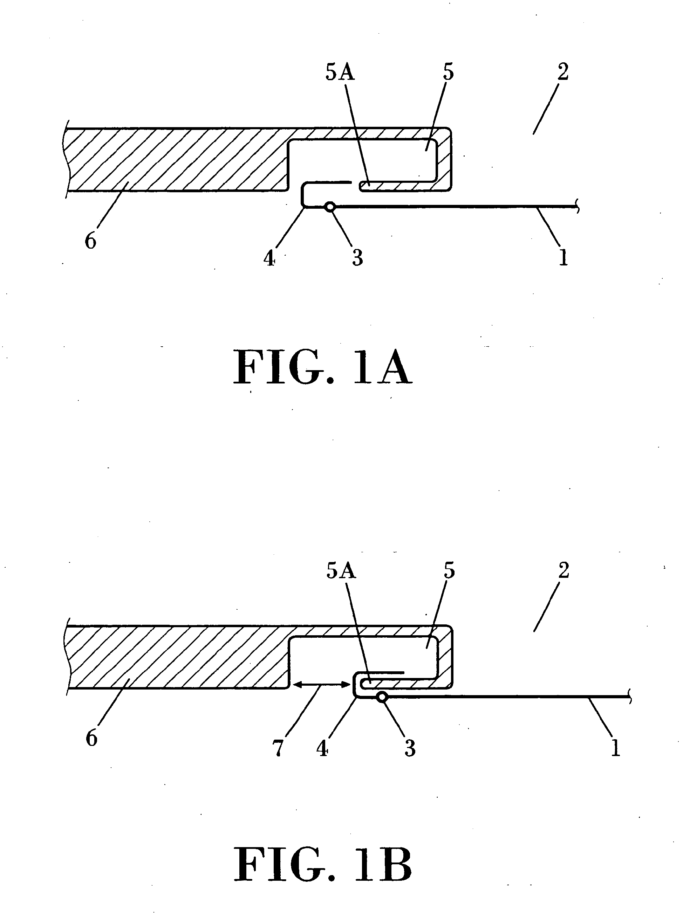

Figures 1A and 1B show a conventional system, in which a blind 1, placed to "shade" a transparent area 2 of the vehicle roof, is provided with a transverse rod 3 which is turn provided with a central hook 4 configured to enter a retaining housing 5 of the vehicle roof (or of the headliner) 6, such that it is retained by a lower flange 5A of said retaining housing 5. As can be observed in Figure 1B, the necessary gap 7 for the hook to comfortably enter the housing is visible in the rest position of the unfolded blind, which is not very aesthetic. Furthermore, this system, based on a central hook, can be unsuitable because it does not assure a good positioning of the transverse rod: the latter may be inclined (in a vertical direction and/or in a horizontal direction), which is not only a problem from the aesthetic point of view, but can also affect the correct operation of the blind (for example, it may cause the rod to be blocked in the longitudinal guides).

Another example of a blind with a central fixing system is described in EP-A-0931682.

Fixing systems comprising two hooks located in correspondence with the side ends of the transverse rod are also known. These systems can reduce the risk of problems related to the inclination of the rod, but still have the aforementioned visible gap.

A system of a blind with a coiling element and an unfolding transverse rod is described in GB-468181. However, it is a system which is perhaps useful for vertical applications, but not for a roof shading blind in a vehicle, because the vibrations and movements of the vehicle can cause the blind to become unhooked, i.e. cause the rod to come out of its housing in the rails. The system described in GB-468181 furthermore does not have longitudinal guides for the rod, which means that the system would not be very practical for an automobile roof application.

FR-A-2882090 describes a system with two shading blinds for a transparent area of an automotive vehicle roof. The blinds are each associated to a conventional coiling element. One of the blinds is located at the front part of the area to be shaded and can be unfolded backwards, and the other blind is located at the rear part of the area to be shaded and is unfolded forwards. Each blind is provided with a transverse rod sliding in a guided manner in two rails, and each transverse rod comprises two friction elements which, when they are in contact with corresponding contact surfaces in the guide-rails, are useful for keeping the blind in an unfolded position. Furthermore, there is a system of mutual coupling between the two rods.

Although it can be a useful system, it has been considered that there is a need for an alternative system which does not depend on friction elements and is simple and reliable.

JP-A-63-258213 discloses a system substantially as per the preamble of claim 1. WO-A-2006/086 965 discloses a shading system with two rods.

### DESCRIPTION OF THE INVENTION

One aspect of the invention relates to a shading system for a transparent area of an automotive vehicle roof, for example, a panoramic roof or part of a panoramic roof, or a transparent sun window of a vehicle roof. The system comprises:
at least one blind (one blind or two blinds, for example);
at least one coiling element associated to said at least one blind, said coiling element being configured to arrange the blind in a coiled manner in a folded position of the blind (if there are two curtains, one or both of them can have such coiling element; the coiling element can be of the type conventionally used to coil and uncoil blinds in vehicles and in other applications, for example, of the type described in FR-A-2882090); and
at least one transverse rod joined to said at least one blind (when there are two blinds, both can have their corresponding transverse rod).

The transverse rod can be conventionally joined to the blind at an end opposite to the end coupled to the coiling element.

The rod can be moved in a guided manner by two longitudinal guides (which can extend in a longitudinal direction in a vehicle) between an unfolded position of the blind (in which the rod is farther away from the coiling element), and the folded position of the blind (in which the rod is close to the coiling element).

The shading system further comprises a temporary fixing system for the rod or the rods in the unfolded position of the blind or blinds. Temporary fixing is understood as a fixing which allows keeping the rod (and with it the blind) unfolded for a time period, until the user decides to remove the blind (i.e. return it to a folded position, coiled by the coiling element, for example). In other words, it is a selective retaining or fixing system for the rod in the unfolded position of the blind, according to the user's wishes.

According to the invention, the temporary fixing system comprises at least one retaining element in correspondence with at least one of the longitudinal guides, said retaining element comprising at least one retaining surface configured to retain the rod in a retaining housing in said retaining element (against a possible force directed towards the folded position of the curtain; this force can be exerted by the coiling element, which can comprise one or several springs to carry out the force). The retaining element further comprises at least one elastic or flexible element (for example, an element comprising or formed by a spring, a metal spring, for example) configured to prevent the rod from accidentally coming out of said retaining housing, when the rod is located in the housing. The retaining element can be an independent element, or can (completely or partially) form part of the guides.

These features allow forming the reliable retention of the rod in a simple and inexpensive manner and at the same time, in a reliable and robust manner, with few moving elements and without needing to have surfaces that are especially configured to assure a high friction. The retaining surface can simply comprise a wall that is vertical and/or perpendicular to the direction of the force exerted by the blind on the rod, whereas the elastic or flexible element can be useful for ensuring that the blind does not accidentally come out of the retaining housing, for example, due to vibrations or the like. The rod can thus be retained in a reliable manner in the retaining housing until the user pushes the rod, overcoming a force exerted by the flexible element.

The retaining surface can be substantially vertical, and/or substantially perpendicular to a movement for moving the rod along the guides, and/or slightly inclined in a direction making it even more difficult for the rod to accidentally come out of the retaining housing.

The elastic element can be configured such that it is moved or deformed by the rod when the rod enters said retaining housing, and such that it must be moved or deformed by the rod so that the rod can come out of said retaining housing. This can be useful for making it even more difficult for the rod to accidentally come out.

The elastic element can be configured to exert a downward force on the rod, such that the elastic element and gravity cooperate to keep the rod in its retained position.

The elastic element can comprise a simple spring, made of metal for example, or any other flexible and/or elastic element useful for the function explained above. The elastic element can be made of the same material as the rest of the retaining element, but there is also the possibility of using different materials for the elastic element and for the rest of the retaining element. For example, the elastic element can be a metal spring, and the rest of the retaining element can be made of another material, plastic, for example.

However, according to other forms of the invention, the flexible element is made of the same material as the rest of the retaining element. In these forms of the invention, the retaining element, including the flexible element, can be formed by a single or "one-piece" body obtained by means of mold injection, and/or it can be made of plastic.

The elastic element can be located in correspondence with an upper part of the retaining housing, to exert a downward force on the rod when said rod enters the retaining housing and when it comes out of the retaining housing, respectively.

Each retaining element can comprise an inlet ramp associated to the corresponding guide and configured to guide a corresponding end of the rod towards a position for entering the retaining housing.

The system can comprise at least one of said retaining elements located in correspondence with each of the guides, to retain both ends of the transverse rod. Symmetry is thus achieved and the risk of the rod inclining is reduced, for example, blocking or making the movement of the blind difficult and/or adopting an unaesthetic position.

The system can comprise two of said retaining elements in correspondence with each guide, to retain both ends of two rods associated to the respective blinds. This option can be practical when the shading system includes two blinds (for example, in a manner similar to that described in FR-A-2882090).

The two retaining elements located in one and the same guide can form part of one and the same retaining part, which can comprises a mold-injected plastic body. This option can be interesting for reducing the manufacturing cost, for example.

The retaining element or elements or the retaining part comprising said elements can be manufactured by means of a simple process and subsequently be locked in the guides, for example in housings provided for placing these retaining parts or elements.

If the retaining parts or elements are made of a material allowing their production by means of mold injection, the elastic elements can be made of the same material, although they can also be manufactured from another material, metal, for example.

The shading system can comprise a single blind, or two blinds, each of them with its rod. In such case, one of the blinds can be located in correspondence with a front part of the guides and configured to be unfolded backwards, and the other blind can be located in correspondence with a rear part of said guides and configured to be unfolded forwards.

Each rod can comprise two ends configured to be housed in respective retaining housings.

Each guide can comprise a rail forming a guiding channel for the corresponding rod, and the retaining housings can be located in correspondence with the respective guiding channels, such that the corresponding end of the rod can pass from the guiding channel to the retaining housing, and vice versa (on a ramp such as that described above, for example).

Another aspect of the invention relates to an automotive vehicle, comprising a roof with a transparent area (a panoramic roof or a sun window with a transparent lock, for example) and comprising, under said transparent area, a system according to that described above.

### DESCRIPTION OF THE DRAWINGS

To complement the description and with the aim of aiding to better understand the features of the invention according to a preferred practical exemplary embodiment thereof, a set of drawings is attached as an integral part of the description, in which the following has been shown with an illustrative and nonlimiting character:
Figures 1A and 1B show a schematic sectional view of a blind retaining system according to the state of the art.
Figures 2 and 3 show a schematic top (Figure 2) and bottom (Figure 3) perspective view of a shading system or module according to an embodiment of the invention.
Figure 4 shows a perspective view of a retaining part for two rods, located in the corresponding guide.
Figure 5 shows the retaining part when it retains a rod.
Figures 6A-6C show a schematic sectional view of the retaining part in the guide, in different operative stages.
Figure 6D shows a view similar to that of Figure 6C, but with a retaining part adapted for the case of a single blind.

### PREFERRED EMBODIMENT OF THE INVENTION

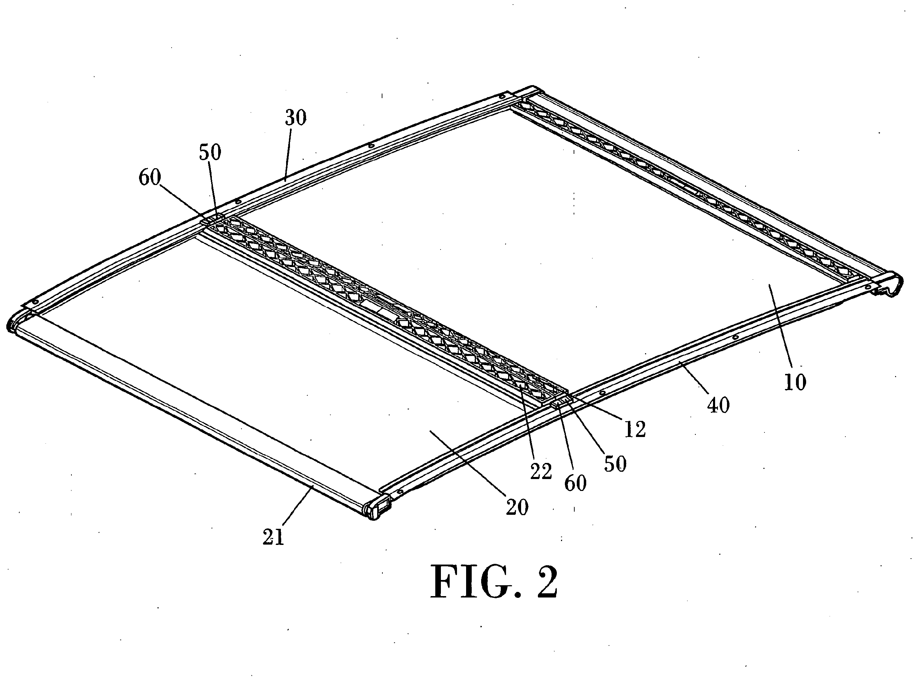

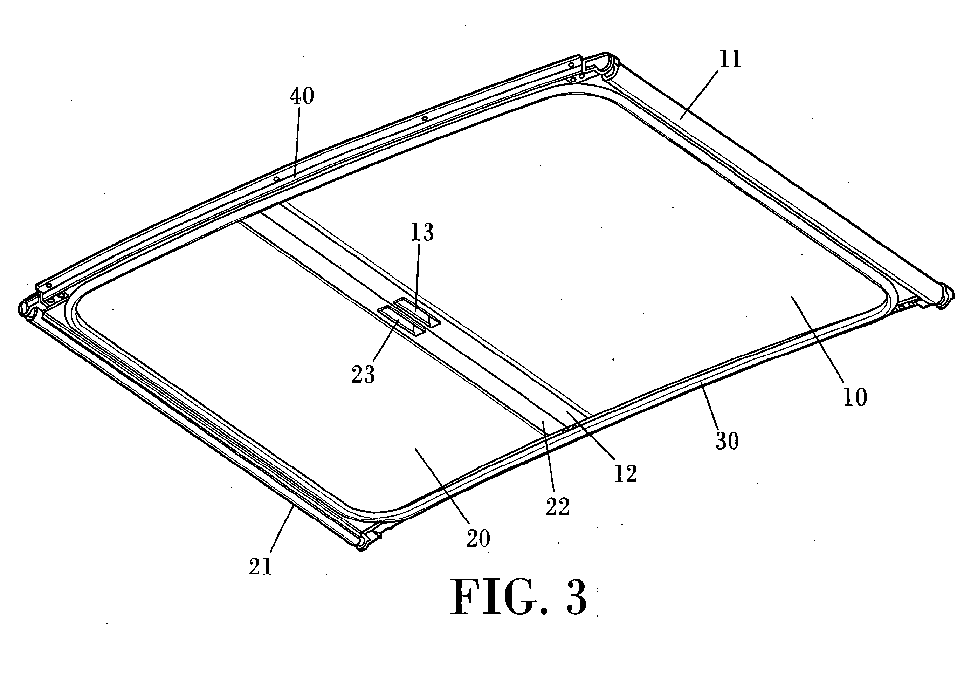

Figures 2 and 3 show a schematic top (Figure 2) and bottom (Figure 3) schematic perspective view of a system or module according to an embodiment of the invention. Two blinds 10 and 20, each of them associated to a conventional coiling element 11 and 21 (useful for pulling the blind to its drawn in or folded position, coiling it conventionally), are joined to respective transverse rods 12 and 22, which are moved (manually, for example), guided by longitudinal guides 30 and 40. Each guide conventionally comprises a rail (made of metal or plastic, for example), defining a channel or groove in which the corresponding end of the rod fits. The rods can thus be moved along the rails, unfolding and drawing in the blind. Figures 2 and 3 show how the shading system comprises two blinds, one blind 10 with its coiling element 11 located at the rear part of the module, such that the blind is unfolded forwards (towards the left in Figures 2 and 3), whereas the other blind 20 is located with its coiling element at the front part, unfolding backwards. However, a single blind is used in another form of the invention.

Figure 3 shows how the rods 12 and 22 comprise gripping inlets 13 and 23 in which the user can introduce his or her fingers to move the corresponding blind forwards or backwards.

Furthermore, Figure 2 schematically shows a body integrating the retaining elements 50 and 60 which are useful for retaining the rods in the unfolded position of the blinds.

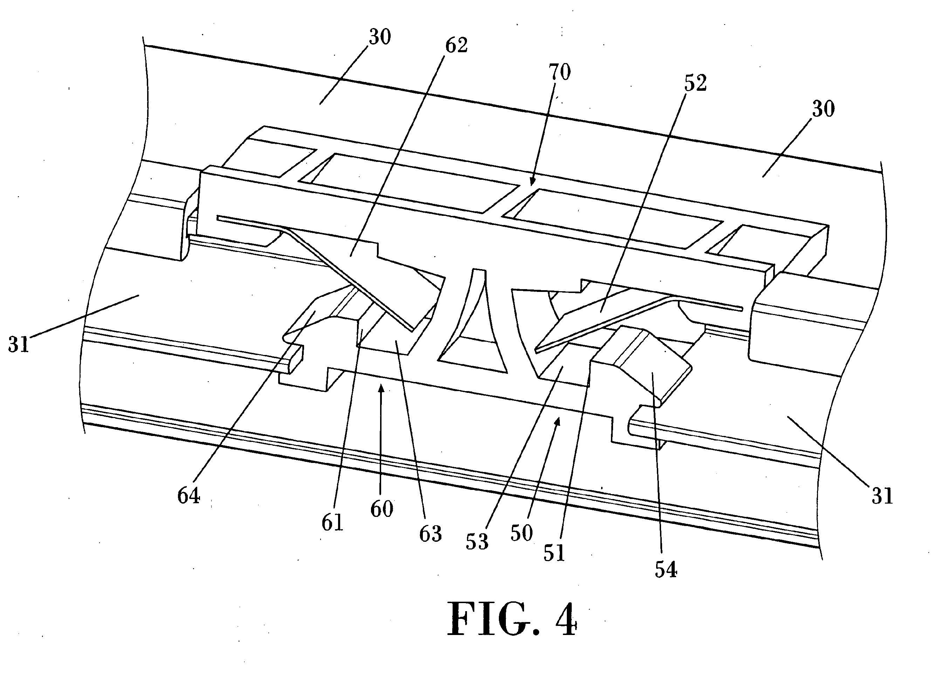

Figure 4 schematically shows how a part 70, which can be made of plastic and is obtained by means of mold injection, for example, (the flat bars 52 and 62 can be made of the same material or of another material, metal, for example), is located in a housing in one of the guides 30. The part 70 comprises two retaining elements 50 and 60, one element for retaining a transverse rod of a blind and another element for retaining the transverse rod of the other blind (if it is a system with two blinds). Each retaining element 50/60 comprises a retaining housing 53/63, delimited (in the direction towards the corresponding coiling element) by a substantially vertical wall or retaining surface 51/61, and by a spring 52/62. Each retaining element further comprises a ramp 54/64 in correspondence with the channel 31 of the guide 30 in which the end of the corresponding rod slides.

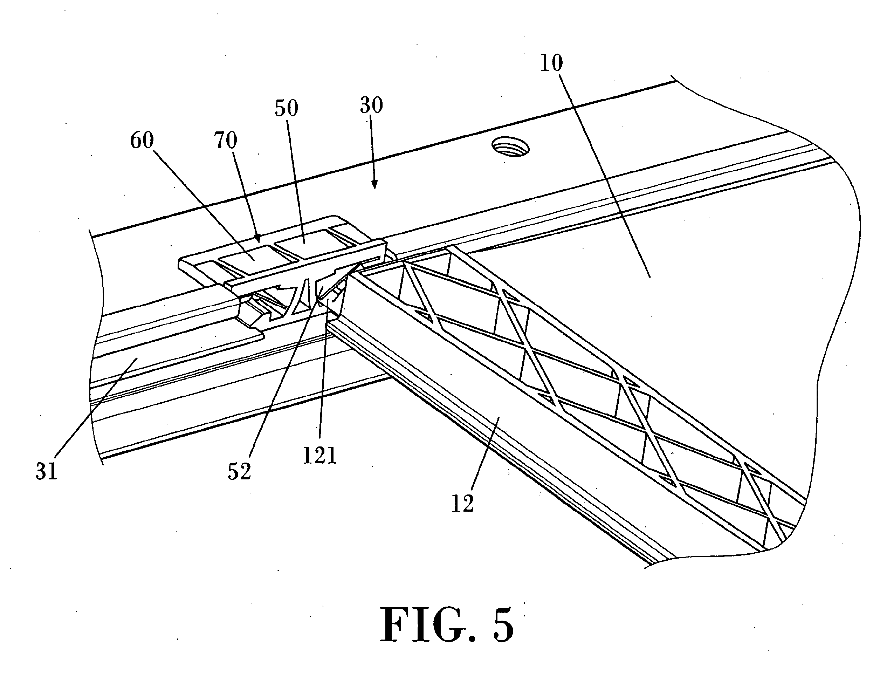

Figure 5 shows how the rod 12 has been retained, with an end 121 of the rod 12 housed in the corresponding retaining housing, and with the spring 52 located above said end, such that it is necessary to move the spring 52 in order to come out. To that end, the user can exert an upward force on the rod 12 from inside the vehicle.

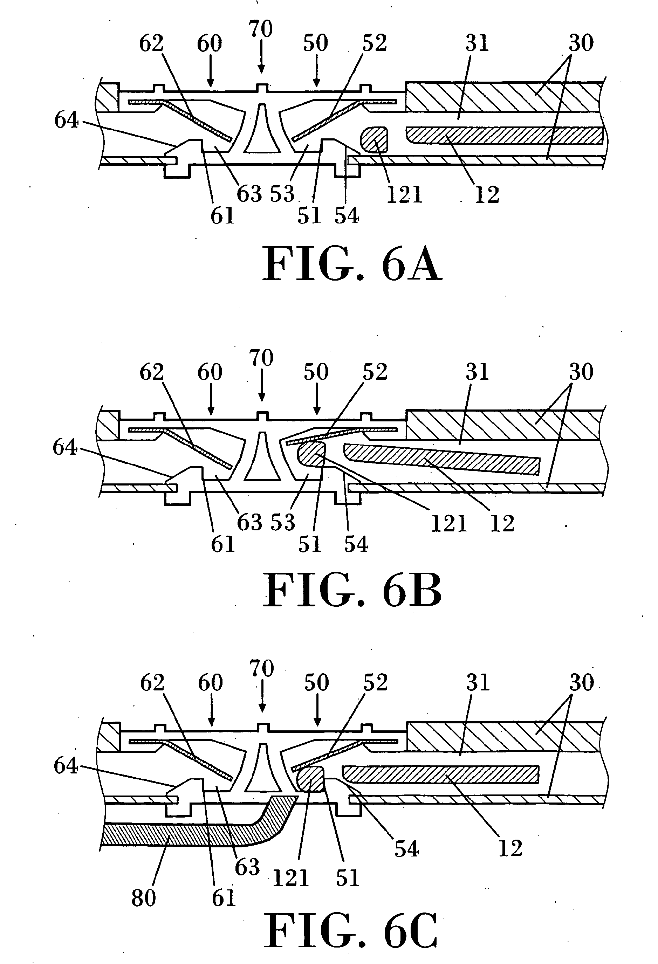

Figures 6A-6C schematically show the operation of the system of the invention. Each of the guides (only one -30- of which is shown in Figures 6A-6C), formed by rails extending in correspondence with the transparent area of the roof, incorporates a retaining part 70, functionally formed by retaining elements 50 and 60. The transverse rod 12 dragging the blind 10 (not shown in Figures 6A-6C) moves along the guides, with its ends 121 housed in the corresponding channel 31 of the rail-guide.

When the rod approaches the retaining element 50 (Figure 6A), the end 121 of the rod abuts against the ramp 54 and heads upwards, moving the spring 52 as can be seen in the Figure 6B. It then surpasses the projection formed by the retaining surface 51 and moves downwards (pushed by the spring 52), being retained in the retaining housing 53 as can be seen in Figure 6C. The combination of the retaining surface 51 and the spring 52 makes it difficult for the rod to accidentally come out of the retaining housing 53.

To draw in the blind, the user simply has to push the rod 12 upwards, overcoming the force exerted by the spring 52, and then backwards (the backward movement can occur due to the action of the corresponding coiling element 11).

In the forms in which there is only one blind, the same type of retaining part 70 can be used, but in such case it may be suitable to allow the headliner 80 to cover the unused retaining element 60, as suggested in Figure 6C, such that there is no gap between the rod in its retained position and the headliner 80, in order to prevent the unaesthetic effect caused by this type of gap.

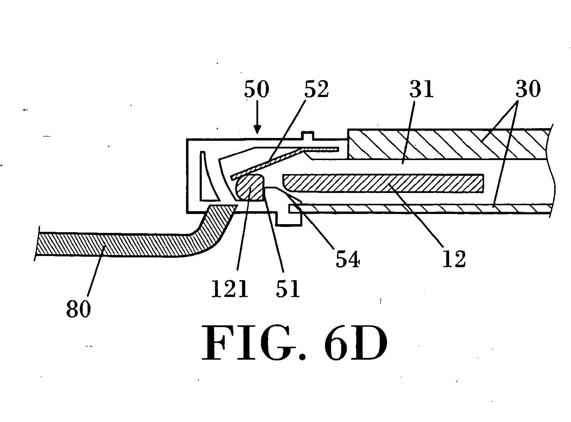

However, when there is only one blind, it may be more practical to use a retaining part which basically corresponds to half of the part 70 described above. Figure 6D shows this type of retaining part, comprising a single retaining element 50.

In this text, the word "comprises" and its variants (such as "comprising", etc.) must not be interpreted in an exclusive manner, i.e. they do not exclude the possibility of that described including other elements, steps, etc.

In addition, the invention is not limited to the specific embodiments which have been described but also covers, for example, the variants that may be carried out by a person having ordinary skill in the art (as regards the choice of materials, dimensions, components, configuratibns, etc., for example), within that inferred from the claims.

## Claims

1. A shading system for a transparent area of an automotive vehicle roof, said shading system comprising:
at least one blind (10, 20),
at least one coiling element (11, 21) associated to said at least one blind, said coiling element being configured to arrange the blind in a coiled manner in a folded position of the blind,
at least one transverse rod (12, 22) joined to said at least one blind, said rod being able to be moved in a guided manner by two longitudinal guides (30, 40), between an unfolded position of the blind, in which the rod (12, 22) is farther away from the coiling element (11, 21), and the folded position of the blind, in which the rod (12, 22) is closer to the coiling element, and
a temporary fixing system for said at least one rod (12, 22) in the unfolded position of the blind,
wherein
said temporary fixing system comprises at least one retaining element (50, 60) in correspondence with at least one of the longitudinal guides, said retaining element (50, 60) comprising at least one retaining surface (51, 61) configured to retain the rod (12, 22) in a retaining housing (53, 63) in said retaining element (50, 60) against a force directed towards the folded position of the blind,
**characterized in that**
said retaining element additionally comprises at least one elastic element (52, 62) configured to prevent the rod (12, 22) from accidentally coming out of said retaining housing (53, 63), and **in that**
said retaining surface (51, 61) is substantially perpendicular to the direction of a movement for moving the rod (12, 22) along the guides (30, 40).

2. A system according to claim 1, **characterized in that** said retaining surface is arranged opposite said elastic element.

3. A system according to any of the previous claims, **characterized in that** the retaining surface (51, 61) is substantially vertical.

4. A system according to any of the previous claims, **characterized in that** the elastic element (52, 62) is configured such that it is moved by the rod (12, 22) when said rod enters said retaining housing (53, 63), and such that it must be moved by the rod so that the rod can come out of said retaining housing.

5. A system according to any of the previous claims, **characterized in that** the elastic element (52, 62) is configured to exert a downward force on the rod.

6. A system according to any of the previous claims, **characterized in that** the elastic element (52, 62) comprises a spring.

7. A system according to claim 6, **characterized in that** the elastic element is formed by the spring.

8. A system according to claim 6 or 7, **characterized in that** the spring is made of metal.

9. A system according to claim 8, **characterized in that** the retaining element is not made of metal, with the exception of the spring.

10. A system according to any of claims 1-7, **characterized in that** the flexible element (52, 62) is made of the same material as the rest of the retaining element (50, 60).

11. A system according to claim 10, **characterized in that** the retaining element (50, 60), including the flexible element (52, 62), is formed by a single body obtained by means of mold injection.

12. A system according to claim 10 or 11, **characterized in that** the retaining element (50, 60) is made of plastic.

13. A system according to any of the previous claims, **characterized in that** the elastic element (52, 62) is located in correspondence with an upper part of the retaining housing (53, 63) to exert a downward force on the rod (12, 22) when said rod enters the retaining housing and when it comes out of the retaining housing, respectively.

14. A system according to any of the previous claims, **characterized in that** each retaining element (50, 60) comprises an inlet ramp (54, 64) associated to the corresponding guide (30, 40) and configured to guide a corresponding end of the rod (12, 22) towards a position for entering said retaining housing (53, 63).

15. A system according to any of the previous claims, **characterized in that** it comprises one of said retaining elements (50, 60) located in correspondence with each of the guides (30, 40) to retain both ends of the transverse rod.

16. A system according to any of the previous claims, **characterized in that** it comprises two of said retaining elements (50, 60) in correspondence with each guide to retain both ends of two rods associated to respective blinds.

17. A system according to claim 16, **characterized in that** the two retaining elements (50, 60) located in one and the same guide form part of one and the same retaining part (70).

18. A system according to claim 17, **characterized in that** said retaining part (70) comprises a plastic body obtained by means of mold injection.

19. A system according to any of claims 14-18, **characterized in that** it comprises two blinds and two rods, one of the blinds being located in correspondence with a front part of the guides and configured to be unfolded backwards, and the other blind being located in correspondence with a rear part of said guides and configured to be unfolded forwards.

20. A system according to any of the previous claims, **characterized in that** each rod comprises two ends configured to be housed in respective retaining housings.

21. A system according to any of the previous claims, **characterized in that** each guide (30, 40) comprises a rail forming a guiding channel for the corresponding rod, and **in that** the retaining housing is located in correspondence with said guiding channel, such that the corresponding end of the rod can pass from the guiding channel to the retaining housing, and vice versa.

22. An automotive vehicle comprising a roof with a transparent area and comprising, under said transparent area, a shading system according to any of the previous claims.

## Patentansprüche

1. Abschattungssystem für einen transparenten Bereich eines Fahrzeugdaches, wobei das Abschattungssystem umfasst:
zumindest eine Blende (10, 20),
zumindest ein Wickelelement (11, 21), das mit der zumindest einen Blende assoziiert ist, wobei das Wickelelement ausgebildet ist, um die Blende auf eine aufgerollte Weise in einer aufgefalteten Position der Blende anzuordnen,
zumindest eine Querstange (12, 22), die mit der zumindest einen Blende verbunden ist, wobei die Stange in der Lage ist auf eine geführte Weise durch zwei Längsführungen (30, 40) zwischen einer ungefalteten Position der Blende, in der die Stange (12, 22) weiter weg von dem Wickelelement (11, 21) ist, und der gefalteten Position der Blende, in der die Stange (12, 22) näher an dem Wickelelement ist, geführt zu werden, und
ein temporäres Befestigungssystem für die zumindest eine Stange (12, 22) in der ungefalteten Position der Blende,
wobei das temporäre Fixierungssystem zumindest ein Rückhalteelement (50, 60) in Zusammenhang mit zumindest einer der Längsführungen umfasst, wobei das Rückhalteelement (50, 60) zumindest eine Rückhalteoberfläche (51, 61), die ausgebildet ist, um die Stange (12, 22) in einem Rückhaltegehäuse (53, 63) in dem Rückhalteelement (50, 60) gegen eine Kraft, die in Richtung der gefalteten Position der Blende gerichtet ist, zurückzuhalten,
**dadurch gekennzeichnet, dass**
das Rückhalteelement zusätzlich zumindest ein elastisches Element (52, 62) umfasst, das ausgebildet ist, um die Stange (12, 22) daran zu hindern versehentlich aus dem Rückhaltegehäuse (53, 63) zu gelangen, und dass
die Rückhalteoberfläche (51, 61) im Wesentlichen senkrecht zu der Richtung einer Bewegung zum Bewegen der Stange (12, 22) entlang der Führungen (30, 40) ist.

2. System nach Anspruch 1, **dadurch gekennzeichnet, dass** die Rückhalteoberfläche gegenüber dem elastischen Element angeordnet ist.

3. System nach einem der vorhergehenden Ansprüche, **dadurch gekennzeichnet, dass** die Rückhalteoberfläche (51, 61) im Wesentlichen vertikal ist.

4. System nach einem der vorhergehenden Ansprüche, **dadurch gekennzeichnet, dass** das elastische Element (52, 62) so ausgebildet ist, dass es durch die Stange (12, 22) bewegt wird, wenn die Stange in das Rückhaltegehäuse (53, 63) eintritt, und so dass das elastische Element durch die Stange bewegt werden muss, so dass die Stange aus dem Rückhaltegehäuse gelangen kann.

5. System nach einem der vorhergehenden Ansprüche, **dadurch gekennzeichnet, dass** das elastische Element (52, 62) ausgebildet ist, um eine nach unten gerichtete Kraft auf das Gehäuse auszuüben.

6. System nach einem der vorhergehenden Ansprüche, **dadurch gekennzeichnet, dass** das elastische Element (52, 62) eine Feder umfasst.

7. System nach Anspruch 6, **dadurch gekennzeichnet, dass** das elastische Element durch die Feder gebildet wird.

8. System nach Anspruch 6 oder 7, **dadurch gekennzeichnet, dass** die Feder aus Metall hergestellt ist.

9. System nach Anspruch 8, **dadurch gekennzeichnet, dass** das Rückhalteelement mit der Ausnahme der Feder nicht aus Metall hergestellt ist.

10. System nach einem der Ansprüche 1 bis 7, **dadurch gekennzeichnet, dass** das flexible Element (52, 62) aus dem gleichen Material wie der Rest der Rückhalteelementes (50, 60) hergestellt ist.

11. System nach Anspruch 10, **dadurch gekennzeichnet, dass** das Rückhalteelement (50, 60), das das flexible Element (52, 62) umfasst, aus einem einzigen Körper, der mittels Spritzgießen erhalten wurde, geformt ist.

12. System nach Anspruch 10 oder 11, **dadurch gekennzeichnet, dass** das Rückhaltelement (50, 60) aus Plastik hergestellt ist.

13. System nach einem der vorhergehenden Ansprüche, **dadurch gekennzeichnet, dass** das elastische Element (52, 62) gemäß einem oberen Abschnitt des Rückhaltegehäuses (53, 63) angeordnet ist, um eine nach unten gerichtete Kraft auf die Stange (12, 22) auszuüben, wenn die Stange in das Rückhaltegehäuse eindringt bzw. wenn sie aus dem Rückhaltegehäuse austritt.

14. System nach einem der vorhergehenden Ansprüche, **dadurch gekennzeichnet, dass** jedes Rückhalteelement (50, 60) eine Einlassrampe (54, 64) umfasst, die der jeweiligen Führung (30, 40) zugeordnet ist, und ausgebildet ist, um ein entsprechendes Ende der Stange (12, 22) in Richtung eines Ortes zum Eintreten in das Rückhaltegehäuse(53, 63) zu führen.

15. System nach einem der vorhergehenden Ansprüche, **dadurch gekennzeichnet, dass** es eines dieser Rückhalteelemente (50, 60) umfasst, das gemäß jeder der Führungen (30, 40) angeordnet ist, um beide Enden der Querstange zurückzuhalten.

16. System nach einem der vorhergehenden Ansprüche, **dadurch gekennzeichnet, dass** es zwei der Rückhaltelemente (50, 60) gemäß jeder Führung umfasst, um beide Enden der Stangen, die den entsprechenden Blenden zugeordnet sind zurückzuhalten.

17. System nach Anspruch 16, **dadurch gekennzeichnet, dass** die zwei Rückhalteelemente (50, 60), die an einer und derselben Stange angeordnet sind, einen Abschnitt von einem und demselben Rückhalteteil (70) ausbilden.

18. System nach Anspruch 17, **dadurch gekennzeichnet, dass** es einen Plastikkörper umfasst, der mittels Spritzgießen erhalten wird.

19. System nach einem der Ansprüche 14 bis 18, **dadurch gekennzeichnet, dass** es zwei Blenden und zwei Stangen umfasst, wobei eine der Blenden gemäß einem Vorderteil der Führungen angeordnet ist und ausgebildet ist, um nach hinten aufgefaltet zu werden, und die andere Blende gemäß einem hinteren Abschnitt der Führungen angeordnet ist und ausgebildet ist, um nach vorne aufgefaltet zu werden.

20. System nach einem der vorhergehenden Ansprüche, **dadurch gekennzeichnet, dass** jede Stange zwei Enden aufweist, die ausgebildet sind, um in entsprechenden Rückhaltegehäusen untergebracht zu werden.

21. System nach einem der vorhergehenden Ansprüche, **dadurch gekennzeichnet, dass** jede Führung (30, 40) ein Geländer umfasst, das einen Führungskanal für die entsprechende Stange ausbildet, und dass das Rückhaltegehäuse gemäß dem Führungskanal angeordnet ist, so dass das entsprechende Ende der Stange von dem Führungskanal zu dem Rückhaltegehäuse verlaufen kann und umgekehrt.

22. Fahrzeug umfassend ein Dach mit einem transparenten Bereich und umfassend unter dem transparenten Bereich ein Abschattungssystem nach einem der vorhergehenden Ansprüche.

## Revendications

1. Système d'occultation pour une zone transparente d'un toit de véhicule automobile, ledit système d'occultation comprenant :
au moins un store (10, 20),
au moins un élément d'enroulement (11, 21) associé audit au moins un store, ledit élément d'enroulement étant configuré pour agencé le store d'une manière enroulée dans une position pliée du store,
au moins une tige transversale (12, 22) assemblée audit au moins un store, ladite tige pouvant être déplacée d'une manière guidée par deux guides longitudinaux (30, 40), entre une position dépliée du store, dans laquelle la tige (12, 22) est plus éloignée de l'élément d'enroulement (11, 21) et la position pliée du store, dans laquelle la tige (12, 22) est plus près de l'élément d'enroulement, et
un dispositif de fixation temporaire pour ladite au moins une tige (12, 22) dans la position dépliée du store,
dans lequel :
ledit système de fixation temporaire comprend au moins un élément de retenue (50, 60) en correspondance avec au moins l'un des guides longitudinaux, ledit élément de retenue (50, 60) comprenant au moins une surface de retenue (51, 61) configurée pour retenir la tige (12, 22) dans un boîtier de retenue (53, 63) dans ledit élément de retenue (50, 60) contre une force dirigée vers la position pliée du store,
**caractérisé en ce que** :
ledit élément de retenue comprend de plus au moins un élément élastique (52, 62) configuré pour empêcher la tige (12, 22) de sortir accidentellement dudit boîtier de retenue (53, 63), et **en ce que** :
ladite surface de retenue (51, 61) est sensiblement perpendiculaire à la direction d'un mouvement pour déplacer la tige (12, 22) le long des guides (30, 40).

2. Système selon la revendication 1, **caractérisé en ce que** ladite surface de retenue est agencée à l'opposé dudit élément élastique.

3. Système selon l'une quelconque des revendications précédentes, **caractérisé en ce que** la surface de retenue (51, 61) est sensiblement verticale.

4. Système selon l'une quelconque des revendications précédentes, **caractérisé en ce que** l'élément élastique (52, 62) est configuré de sorte qu'il est déplacé par la tige (12, 22) lorsque ladite tige pénètre dans ledit boîtier de retenue (53, 63) et de sorte qu'il doit être déplacé par la tige de sorte que la tige peut sortir dudit boîtier de retenue.

5. Système selon l'une quelconque des revendications précédentes, **caractérisé en ce que** l'élément élastique (52, 62) est configuré pour exercer une force descendante sur la tige.

6. Système selon l'une quelconque des revendications précédentes, **caractérisé en ce que** l'élément élastique (52, 62) comprend un ressort.

7. Système selon la revendication 6, **caractérisé en ce que** l'élément élastique est formé par le ressort.

8. Système selon la revendication 6 ou 7, **caractérisé en ce que** le ressort est réalisé à partir de métal.

9. Système selon la revendication 8, **caractérisé en ce que** l'élément de retenue n'est pas réalisé à partir de métal, à l'exception du ressort.

10. Système selon l'une quelconque des revendications 1 à 7, **caractérisé en ce que** l'élément flexible (52, 62) est réalisé avec le même matériau que le reste de l'élément de retenue (50, 60).

11. Système selon la revendication 10, **caractérisé en ce que** l'élément de retenue (50, 60) comprenant l'élément flexible (52, 62) est formé par un corps unique obtenu au moyen du moulage par injection.

12. Système selon la revendication 10 ou 11, **caractérisé en ce que** l'élément de retenue (50, 60) est réalisé à partir d'une matière plastique.

13. Système selon l'une quelconque des revendications précédentes, **caractérisé en ce que** l'élément élastique (52, 62) est positionné en correspondance avec une partie supérieure du boîtier de retenue (53, 63) pour exercer une force descendante sur la tige (12, 22) lorsque ladite tige pénètre dans le boîtier de retenue et lorsqu'elle sort du boîtier de retenue, respectivement.

14. Système selon l'une quelconque des revendications précédentes, **caractérisé en ce que** chaque élément de retenue (50, 60) comprend une rampe d'entrée (54, 64) associée au guide correspondant (30, 40) et configurée pour guider une extrémité correspondante de la tige (12, 22) vers une position pour pénétrer dans ledit boîtier de retenue (53, 63).

15. Système selon l'une quelconque des revendications précédentes, **caractérisé en ce qu'**il comprend l'un desdits éléments de retenue (50, 60) situés en correspondance avec chacun des guides (30, 40) pour retenir les deux extrémités de la tige transversale.

16. Système selon l'une quelconque des revendications précédentes, **caractérisé en ce qu'**il comprend deux desdits éléments de retenue (50, 60) en correspondance avec chaque guide pour retenir les deux extrémités des deux tiges associées aux stores respectifs.

17. Système selon la revendication 16, **caractérisé en ce que** les deux éléments de retenue (50, 60) positionnés dans le seul et même guide font partie de la seule et même partie de retenue (70).

18. Système selon la revendication 17, **caractérisé en ce que** ladite partie de retenue (70) comprend un corps en plastique obtenu au moyen du moulage par injection.

19. Système selon l'une quelconque des revendications 14 à 18, **caractérisé en ce qu'**il comprend deux stores et deux tiges, l'un des stores étant positionné en correspondance avec une partie avant des guides et configuré pour être déplié vers l'arrière, et l'autre store étant positionné en correspondance avec une partie arrière des guides et configuré pour être déplié vers l'avant.

20. Système selon l'une quelconque des revendications précédentes, **caractérisé en ce que** chaque tige comprend deux extrémités configurées pour être logées dans des boîtiers de retenue respectifs.

21. système selon l'une quelconque des revendications précédentes, **caractérisé en ce que** chaque guide (30, 40) comprend un rail formant un canal de guidage pour la tige correspondante, et **en ce que** le boîtier de retenue est positionné en correspondance avec ledit canal de guidage, de sorte que l'extrémité correspondante de la tige peut passer du canal de guidage dans le boîtier de retenue et vice-versa.

22. Véhicule automobile comprenant un toit avec une zone transparente et comprenant, sous ladite zone transparente, un système d'occultation selon l'une quelconque des revendications précédentes.
